# EUROPEAN PATENT SPECIFICATION

(11) **EP 4 643 013 B1**
(45) Date of publication and mention of the grant of the patent: **11.11.2026**
(21) Application number: 24727415.2
(22) Date of filing: 22.05.2024
(51) Int. Cl.: F03D 9/11, F03D 9/19

(54) **BATTERY ARRANGEMENT FOR STAND-ALONE WIND TURBINE**
BATTERIEANORDNUNG FÜR EINE EIGENSTÄNDIGE WINDTURBINE
AGENCEMENT DE BATTERIE POUR ÉOLIENNE AUTONOME

(30) Priority: 09.06.2023 EP 23178403
(43) Date of publication of application: 05.11.2025
(73) Proprietor: Siemens Energy Global GmbH & Co. KG, 81739 München (DE)
(72) Inventor: LAYER, Max, 10119 Berlin (DE); RUNSER, Thibaut, 90478 Nürnberg (DE)
(86) International application number: PCT/EP2024/064004
(87) International publication number: WO 2024/251512

(56) References cited:
- WO-A1-2022/182237
- WO-A1-2023/001426
- WO-A1-2023/046586
- CN-A- 116 207 783
- DE-U1- 202016 102 785
- US-A1- 2006 137 348

## Description

Technologies based on renewable energy, in particular, wind turbines, play a key role to reduce CO2 emissions. Wind turbines convert wind energy, a renewable resource, into electricity that is typically supplied to the electrical grid.

Other technologies are also being explored to produce energy. An electrolyzer uses electrolysis which is a widely known electro-chemical method, wherein a direct (electrical) current DC is used to drive an otherwise nonspontaneous chemical reaction. Recently electrolysis has received attention as a factor in fighting climate change, as it may be utilized in so-called "power to X" processes. In these processes, electrical energy converts a supply medium into an output medium, chemical energy, via electrolysis.

Electrolyzers are being arranged with offshore wind turbines, wherein an offshore wind turbine is erected in water. The wind turbine includes a nacelle which is supported by a support structure that includes a tower, transition structure, and a substructure. The transition structure is connected to the tower and to the substructure. The transition structure is thereby arranged in between the tower and the substructure. Typically, the transition structure is or includes a platform. The wind turbine includes a generator that is housed in the nacelle and a rotatable hub with at least one blade mounted to the rotatable hub. Wherein wind power influences the at least one blade to rotate the hub, whereby wind power is converted to mechanical power that is then converted into electrical power by the generator. The electrical power that is generated by the wind turbine is supplied to the electrolyzer in order to produce H₂ from the water. Document WO 2023/001 426 A1 discloses such an arrangement.

It is an object of the present invention to provide a battery arrangement for a stand-alone wind turbine with an electrolyzer.

This object is solved by an arrangement according to the independent claim 1.

Preferred embodiments are subject of correspondingly dependent claims and the following description.

Wind energy is a renewable, but inconsistent resource. There are times that the wind is not available, the wind speed is too high, or for other reasons, the wind turbine does not produce energy. Impurities to the output medium and/or damage to the electrolyzer may occur if the electrolyzer does not have sufficient power or if it is not properly shut down. In order to prevent said impurities and/or damage due to lack of power, a battery is supplied. The weight of the battery presents challenges. Putting the battery on the platform provides easy access to the battery and can eliminate the need of further structure needed to mount the battery. However, when the battery is placed on the platform, a large mechanical stress is produced on the platform. This stress may require a reinforcement of the platform. Additionally, the battery arranged at the platform produces instability in the support structure which requires adding counterweights to the support structure, below the platform, to balance the weight of the battery. An improved battery arrangement is needed.

According to the invention, an arrangement that includes a wind turbine, a battery, and a further device, namely an electrolyzer, is provided. The wind turbine is an offshore wind turbine and includes a support structure, a generator, and a nacelle. Wherein the support structure includes a tower, transition structure, and a substructure. The transition structure is connected to the tower and to the substructure. The transition structure is thereby arranged in between the tower and the substructure. The transition structure is a platform. The platform is above sea level. The further device is electrically connected to the generator and is electrically connected to the battery. The battery is electrically connected to the generator and to the further device, wherein the battery is charged during a rotation of the hub and discharged when energy is not being produced by the generator. The battery is placed at the substructure. The term "placed at" includes "touching", "on, and/or "at least partially within". For example, the battery may be touching the substructure, on the substructure, contained partially within the substructure or contained wholly within the substructure.

The battery arrangement, being place at the substructure, advantageously reduces stress on the platform. Furthermore, this arrangement provides the advantage of reducing footprint on the platform.

The further device is arranged on the platform for easy accessibility.

The substructure includes the battery. Placing the battery at the substructure, which is below the platform, versus on the platform, may beneficially reduce the amount of counterweight to balance the load of the battery or possibly eliminate the need for counterweights to offset the load of the battery.

According to the invention, the wind turbine is in island mode. Island mode is when a wind turbine is disconnected from the grid. During island mode, electrical energy is not supplied to the grid by the wind turbine. It is feasible that transmission lines from the grid to the wind are excluded so that the wind turbine only operates in island mode, whereby a material and cost reduction can be realized by said exclusion.

As the wind turbine is an offshore wind turbine a reduction of equipment, e.g., pipes to supply the electrolyzer with the water to be converted to hydrogen can be achieved.

The battery may be below sea level. Being below sea level includes any contact with the sea. The sea water may provide thermal protection to the battery, such that the battery does not freeze or does not overheat. This may help prolong the life of the battery and reduce the discharge rate of the battery.

The battery may be above sea level thereby providing easy access to the battery.

The battery may be placed at a base portion of the substructure thereby providing stability to the wind turbine.

There are different substructure types, such as monopile, tripod, jacket, spar, buoy, etc., depending on the wind turbine technology and the offshore type.

In a buoy substructure, the center of mass is below sea level to help stabilize the wind turbine. In an embodiment, the battery is contained within the buoy which is the base portion of a buoy type substructure. According to this arrangement, the battery would be below sea level. Advantageously, the arrangement of the battery being in the buoy could provide or at least contribute to mass need for the stability of the buoy substructure.

A monopole substructure is a simple design where the substructure is at least partially below ground, for example, a portion of the substructure is driven into the seabed. According to an embodiment, a battery is placed at the monopole substructure thereby providing stability to the substructure. Said battery arrangement lowers the center of mass, in contrast to the battery being on the platform. Advantageously, a reduction in reinforcement to the substructure may be achieved. The arrangement can contribute to avoiding a buckling of the support structure. Batteries may be distributed along the monopole structure which advantageously distributes the weight along the monopole structure. All or a portion of the distributed batteries may be arranged above sea level or below sea.

Substructures such as tripod and jacket types include columns that are connected to braces.

The columns are spaced apart. The spacing may be vertically and/or horizontally in relation the ground. In an embodiment, batteries are placed at the columns in a distributed manner thereby reducing stress at any one column and increasing stability. Various distributions of the batteries, and thereby distribution of weight, are possible. For example, a battery may be placed at a first column that is vertically spaced from a second column. Similarly, a battery may be placed at a first column that is horizontally spaced from the second column. Placing the batteries at columns at base portion, advantageously lowers the center of mass in comparison to batteries placed above the base portion. Thereby providing stability. All or a portion the batteries may be arranged above sea level or below sea. For example, a battery may be arranged on a column, above sea level; a battery may be arranged within a column, e.g., a cavity formed from the top of the column, below sea level.

The further device is an electrolyzer. The electrolyzer includes an auxiliary arrangement that includes devices that regulate the pressure, temperature and/or fluids in the electrolyzer. For example. the auxiliaries may include at least one of the following: compressor, heater, ventilation, air conditioning, water treatment. The regulation provided by auxiliary arrangement advantageously avoids impurities being produced by the electrolyzer as well as avoids damage to the electrolyzer.

Wherein the wind turbine supplies energy to the electrolyzer via the connection between the electrolyzer and the generator. The electrolyzer, receiving electricity from the generator, converts the supply medium into the output medium. In particular, the supply medium is water and the output medium in hydrogen. The terms "operation", "operating", "operational", and "operational mode" define that the electrolyzer is receiving enough power from the generator to convert water to hydrogen without impurities.

When the power from the generator is interrupted or is no longer sufficient to keep the electrolyzer in the operational mode, the electrolyzer is transitioned to a ready mode. The terms "ready" and "ready mode" define that power to electrolyzer is provided by the battery and the auxiliary arrangement keeps the electrolyzer conditioned to start producing hydrogen. The auxiliary arrangement keeps the cells pressurized and warm During the ready mode, the electrolyzer is not producing hydrogen. For example, the power from the battery may be insufficient to produce hydrogen without impurities. While in the ready mode, when the power from the generator is resumed or when to power from the generator is sufficient for the electrolyzer to be in the operational mode, the electrolyzer is transitioned back into operational mode.

It is feasible that while in the ready mode and over a duration of time, the battery will have insufficient power to keep the electrolyzer in ready mode. When this occurs, the electrolyzer is transitioned to a stop mode. In the stop, mode the auxiliary arrangement uses less power than while in the ready mode. The auxiliary arrangement during the stop mode keeps the electrolyzer from damage, e.g., freezing or turning into a fuel cell. During the stop mode, it is advantageous for the cells to be depressurized, by the auxiliary arrangement, and kept at a colder temperature than for ready mode.

The ready mode and/or stop mode need to be maintained over a period of time. A period of 3 days (72hours) without wind should be considered. A relatively low energy, as compared to the operational energy, can be sufficient for the stop mode. The energy supplied by the battery is greater than 0% and preferably greater than or equal 1% of the energy for the operational mode of the electrolyzer. The energy supplied by the battery is less than or equal to 6% of the energy for operational mode of the electrolyzer. This may be reduced to less than or equal to 4% to reduce the battery size. For example, the energy provided by the battery may be 1% ≤ operational mode energy for the electrolyzer ≥ 4%. The energy storage to supply said 4% may be computed by the following: power rating of the electrolyzer * .04 * 72. For example, a 15-megawatt (MW) electrolyzer would need an energy storage of 43.2 megawatt hours (MWh) for supplying the auxiliaries and to bypass a wind shortage of 3 days.

As one skilled in the art would recognize, the more energy storage provided by the battery, the more the battery weighs. The weight of the batteries presents challenges. Currently, the battery density for best-in-class battery that is commercially-available-battery is around 260 Wh/kg when using Li-ion batteries. Therefore, the battery weight for an energy storage of 43.2 MWh is around 166 tons. This load would put a large mechanical stress on the platform. Additionally, the battery footprint could be restrictive.

The properties, features and advantages of the invention described above, as well as the manner in which they are achieved, will be explained in more detail in connection with the figures in the following description of the example and variations thereof. The example and the corresponding variations serve to explain the invention and do not limit the invention to the combinations of features indicated therein, even with respect to functional features.

To easily identify the discussion of any particular element or act, the most significant digit or digits in a reference number refer to the figure number in which that element is first introduced.

It is shown in:
- FIG. 1: a schematic illustration of a typical wind turbine;
- FIG. 2: a schematic illustration of a typical electrolyzer;
- FIG. 3: a schematic illustration of an arrangement of a wind turbine according of FIG 1, an electrolyzer of FIG. 2, and a battery;
- FIG. 4A: a schematic illustration of a substructure with a battery-counter weight suitable for the arrangement of FIG. 3;
- FIG. 4B: a schematic illustration of an embodiment of a substructure with a battery-counter weight suitable for the arrangement of FIG. 3;
- FIG. 4C: a schematic illustration of an embodiment of a substructure with a battery-counter weight suitable for the arrangement of FIG. 3;
- FIG. 5: a schematic illustration of an embodiment of an arrangement of a wind turbine according of FIG 1, an electrolyzer of FIG. 2, and a battery;
- FIG. 6A: a schematic illustration of an embodiment of a substructure of FIG. 5 suitable for the arrangement of FIG. 5;
- FIG. 6B: a schematic illustration of an embodiment of a substructure of FIG. 5 suitable for the arrangement of FIG. 5;
- FIG. 6C: a schematic illustration of an embodiment of a substructure of FIG. 5 suitable for the arrangement of FIG. 5;
- FIG. 7: a schematic illustration of an auxiliary arrangement for the electrolyzer.

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

Also, it should be understood that the words or phrases used herein should be construed broadly, unless expressly limited in some examples. For example, the terms "including," "having," and "comprising," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

In addition, the term "adjacent to" may mean that an element is relatively near to but not in contact with a further element or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

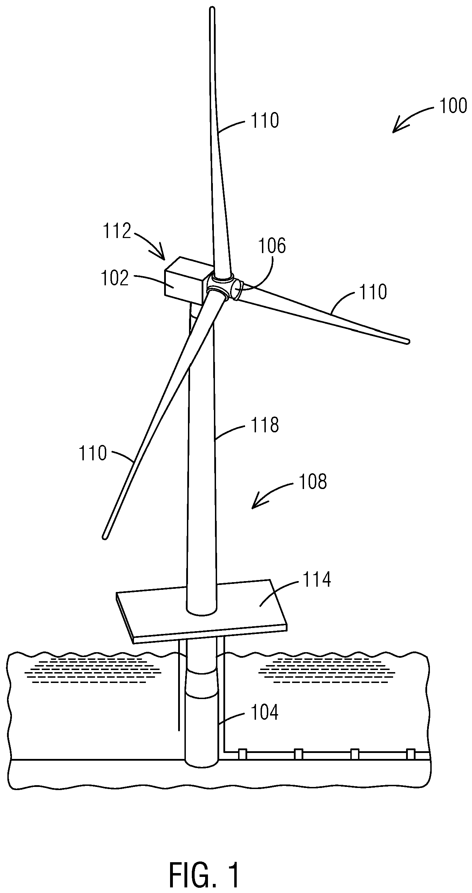

FIG. 1 illustrates a schematic view of a typical wind turbine 100 that includes a nacelle 112 that houses a generator 102, and substructure 108. The generator 102 is connected to a rotatable hub 106 with at least one blade 110 attached thereto. The nacelle 112 is supported by the support structure 108 that includes a tower 118 and a substructure 104. The tower 118 and the substructure 104 are connected to each other by way of a transition structure 114 between the tower 118 and substructure 104. The illustrated transitional section 114 is a platform. The tower 118 connects to the nacelle 112 at one end and to the transitional section 114 at the other end. The substructure 104 connects to the transitional section 114 at one end and is secured to the ground. The securing to the ground may be, for example, a foundation having a portion below ground level, wires that secure a floating tower to the ground, a base structure that contacts the ground, and etc.

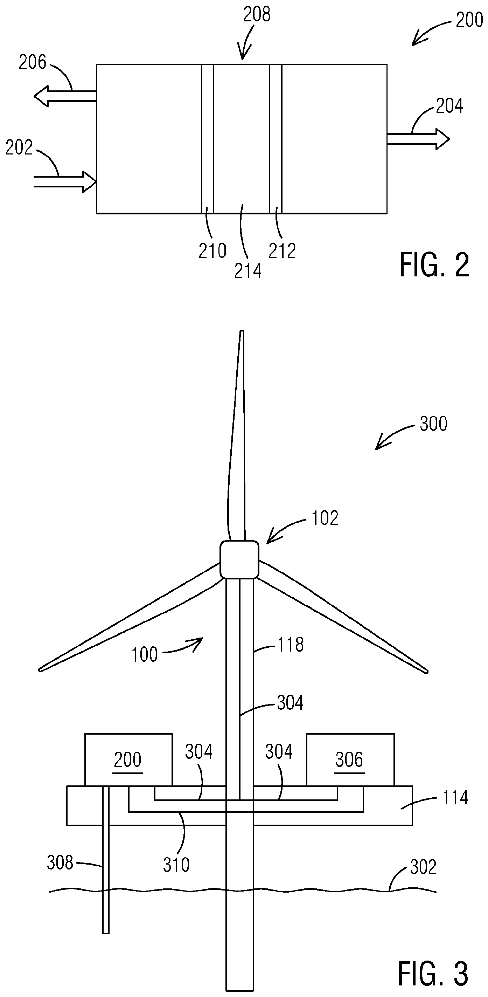

FIG. 2 illustrates a schematic view of a typical electrolyzer 200, comprising a supply medium 202 that through electrolysis produces an output medium 204 and a by-product 206. The electrolyzer 200 includes a cell 208 that includes negative electrode, anode 210, and positive electrode, cathode 212, for the direct current to produce the chemical reaction, and an electrolyte 214 separating the anode 210 and cathode 212. In particular, a water-supply medium 202 is converted to a hydrogen H₂ output medium 204 with an oxygen O₂ by-product 206.

FIG. 3 illustrates a schematic view an arrangement 300 including a wind turbine 100, electrolyzer 200, and battery 306, wherein the electrolyzer 200 and the battery 306 are both arranged on the platform 114. The platform 114 is above sea level 302. The generator is electrically connected to the electrolyzer 200 and the battery 306 via connector 304. The battery 306 is electrically connected to the electrolyzer 200 via connector 310.

A duct 308 is arranged to provide water, below sea level 302, to the electrolyzer 200.

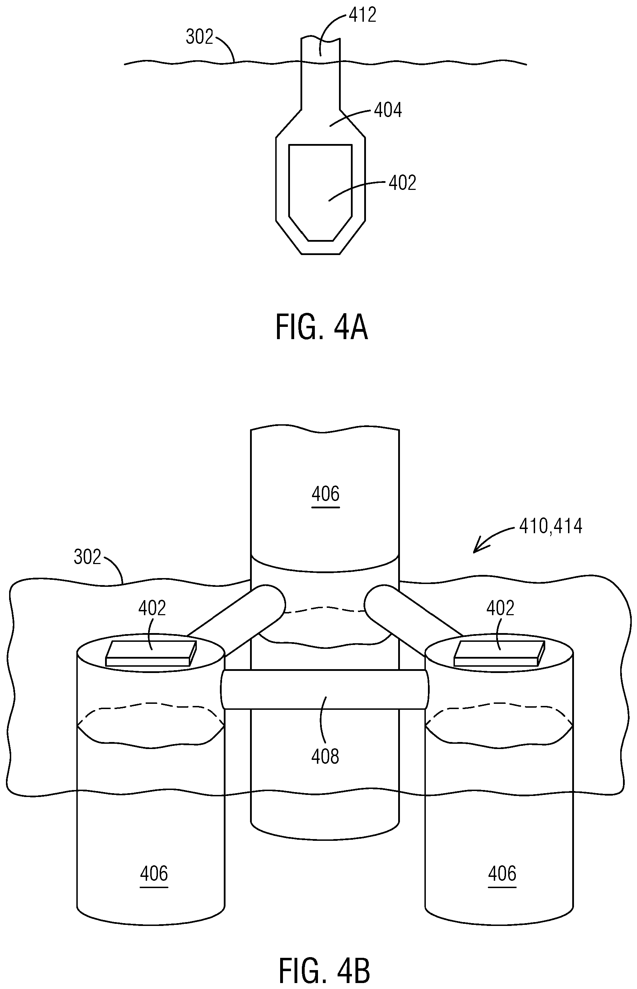

FIG. 4A - FIG. 4C illustrate schematic embodiments using one or more battery-counter weights 402 to stabilize the wind turbine 100 due to the weight of the battery 306 on the platform 114.

FIG. 4A illustrates a buoy 404 type substructure 412 that includes a battery-counter weight 402. The battery-counter weight 402 is contained in the buoy 404, which is below sea level 302.

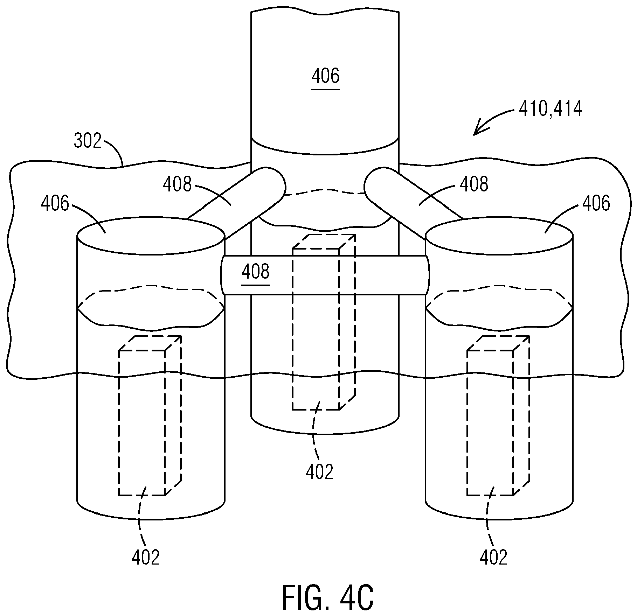

FIG.4B and FIG. 4C illustrates a substructure 414 that includes a plurality of columns 406 each connected to at least one brace 408. The substructure 414 illustrated in FIG.4B and FIG. 4C is a tripod type substructure 410. A battery-counter weight 402 is included in at least one column 406.

Each of the battery-counter weights 402 illustrated in FIG. 4B is above sea level 302. Each of the battery-counter weights 402 illustrated in FIG. 4 C is below sea level 302.

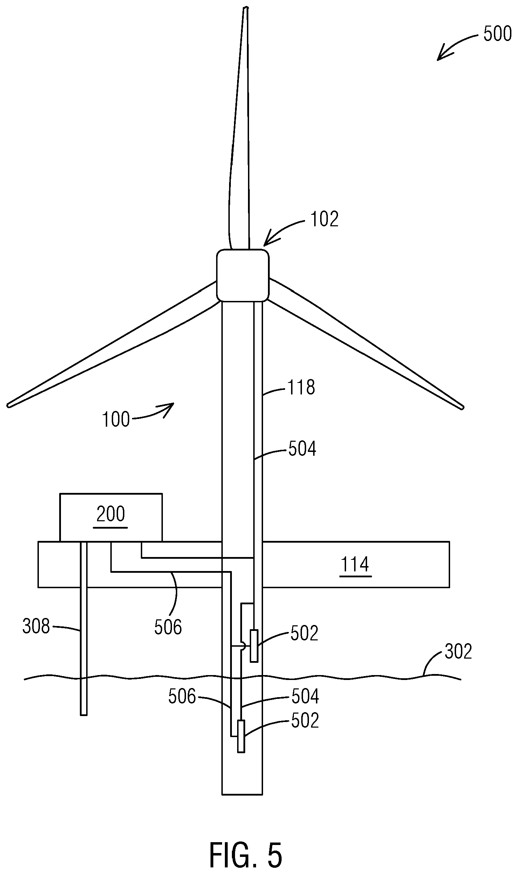

FIG. 5 illustrates a schematic view an arrangement 500 including a wind turbine 100, electrolyzer 200, and batteries 502, wherein the electrolyzer 200 is arranged on the platform 114. The platform 114 is above sea level 302.

A duct 308 is arranged to provide water to the electrolyzer 200.

The generator 102 is electrically connected to the electrolyzer 200 and batteries 502 via connector 504. The electrolyzer 200 is connected to the batteries 502 via connector 506.

The batteries 502 are placed at the substructure 606, The weight on the platform 114 is decreased with the batteries 502 placed at the substructure 606 as compared to the arrangement of the batteries in FIG. 3; thereby reducing stress on the platform 114. Greater stability of the substructure 606 may be obtained by moving the batteries 502 below the transitional section 114. Additionally, real estate on the platform 114 is gained.

During operational mode of the electrolyzer 200, the generator supplies power via connector 504 to the electrolyzer 200 to produce hydrogen and to the batteries 502 for energy storage. During and ready mode and a stop mode, the electrolyzer 200 receives power from batteries 502.

The batteries 306 may be arranged above or below sea level 302.

It would be understood that other arrangements may be used to electrically connect the generator to the battery and to the electrolyzer, and to electrically connect the electrolyzer to the battery.

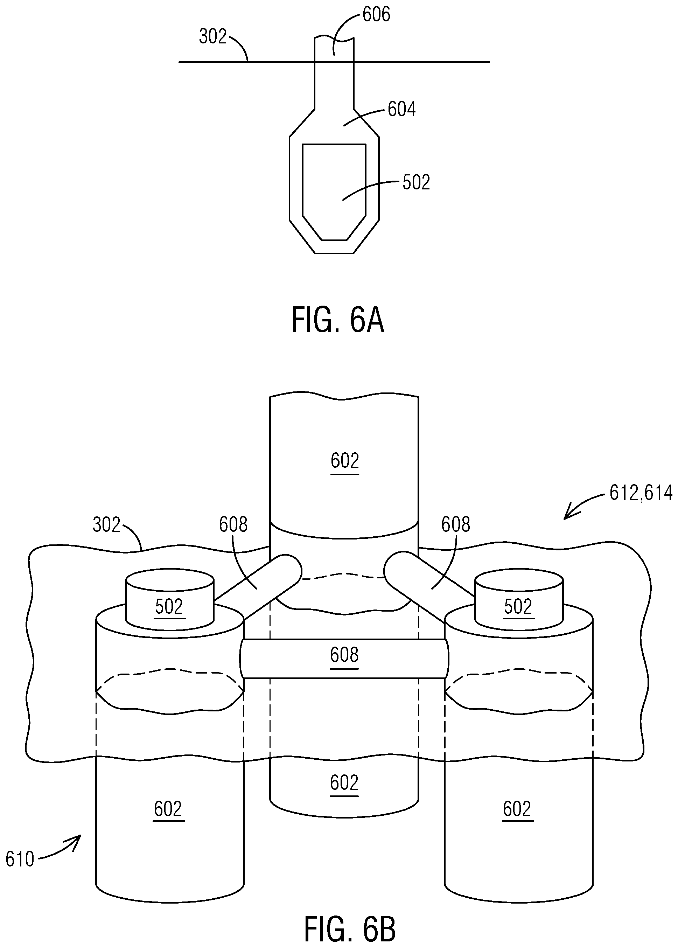

FIG. 6A. illustrates schematic view of the substructure 606 according to an embodiment of FIG. 5. FIG. 6A shows a buoy type substructure 606 that includes one or more batteries 502 contained within the substructure 606 at a base portion. More specifically, within the buoy 604 of the substructure 606. The one or more batteries 502 are below sea level 302.

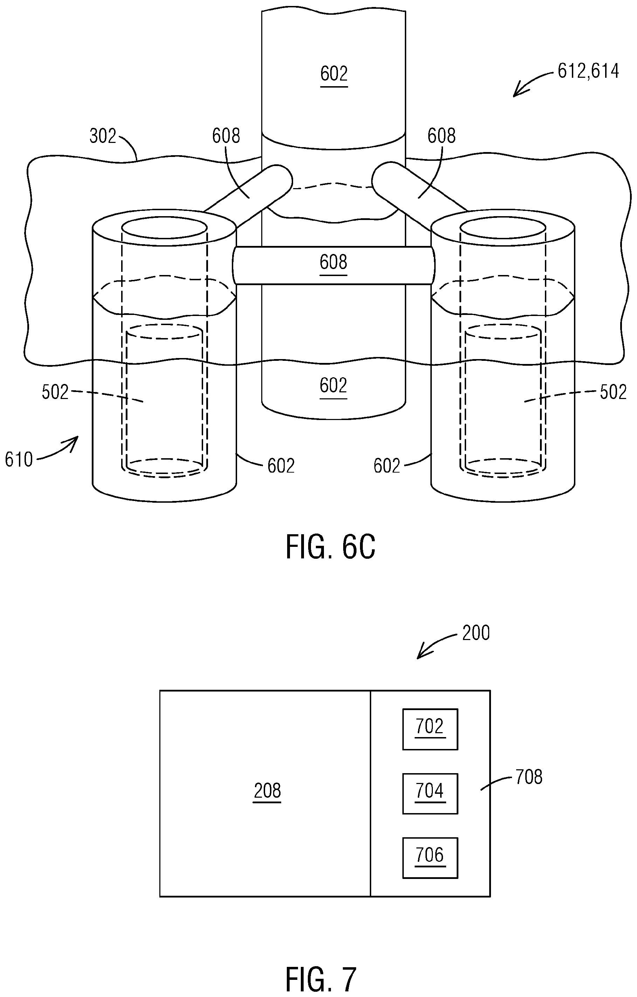

FIG. 6B and FIG. 6C. illustrates schematic view of substructure 614 according to embodiments of FIG. 5. The substructure 614 includes a plurality of columns 602 each connected to at least one brace 608. This type of formation is common in a tripod or a jacket type substructure. According to the illustration adjacent columns 602 are interconnected via a brace 608. However, this is merely an example, and it is possible a brace 608 is omitted between adjacent columns 602 provided. Columns may be arranged horizontally and/or vertically in relation to each other and to the ground. The group of columns 602 nearest the ground, typically in the same horizontal plane, is considered the base portion 610 of the substructure 606. The substructure 614 illustrated in FIG.6B and FIG. 6C is a tripod type substructure 612.

FIG. 6B illustrates the batteries 502 placed at the substructure 612. According to the illustration, a battery 502 is on each column 602 of the base portion 610. The batteries 502 are arranged above sea level 302.

FIG. 6C illustrates the batteries 502 is within the substructures 614. According to the illustration, a battery 502 is within each column 602 of the base portion 610. The batteries 502 are arranged below sea level 302.

FIG. 6B and FIG. 6C are for illustrative purposes only. It would be understood that any arrangement of the batteries 306 on or within the substructure would be understood and that it is possible that a battery 502 is placed at some columns and not others. It would also be understood that a combination of placements above sea level and below sea level may be used.

FIG. 7 illustrates a schematic view of an auxiliary arrangement 708 for the electrolyzer 200.

The auxiliary arrangement 708 includes a plurality of auxiliary devices. The illustrated devices include a pressure regulator 702, a fluid regulator 704, and a temperature regulator 706.

The weight of the batteries presents challenges. With the battery placed at the substructure versus the transitional section, a greater stability would be achieved. Moreover, this placement of the battery could eliminate the need for counterweights, thereby reducing the weight of the tower.

Although an exemplary embodiment of the present disclosure has been described in detail, those skilled in the art will understand that various changes, substitutions, variations, and improvements disclosed herein may be made without departing from the scope of the disclosure in its broadest form.

The scope of patented subject matter is defined by the appended claims.

## Claims

1. An arrangement, comprising:
an offshore wind turbine (100) in an island mode, island mode being when the wind turbine is disconnected from the grid, comprising:
a support structure (108) comprising a tower (118), a transition structure (114), and a substructure (104, 508, 606, 602, 612), wherein the transition structure (114) is connected to the tower (118) and is connected to the substructure (104), wherein the substructure (104) is above sea level (302),
a generator (102) comprising a rotatable hub (106) with at least one blade (110)
mounted to the rotatable hub (106), and
a nacelle (112) mounted on the tower (118) the nacelle (112) housing the generator (102);
a battery (502) electrically connected to the generator (102) and configured to be charged by the wind turbine during a rotation of the rotatable hub, wherein the battery is placed at the substructure (508, 606, 602, 612); and
an electrolyzer (200) electrically connected to the generator (102) and electrically connected to the battery (502),
wherein during an operational mode of the electrolyzer (200), the generator (102) is configured to supply energy to the electrolyzer (200) via the connection between the electrolyzer (200) and the generator (102),
wherein during a ready mode of the electrolyzer (200), the battery (502) is configured to supply energy to the electrolyzer (200) and an auxiliary arrangement (708) of the electrolyzer is configured to keep the electrolyzer (200) conditioned to start producing hydrogen by keeping the cells (208) of the electrolyzer pressurized and warm, while the electrolyzer (200) is not producing hydrogen, and
wherein the transition structure (114) is a platform, and
wherein the electrolyzer (200) is arranged on the platform.

2. The arrangement of claim 1,
wherein a counterweight to compensate for the weight of the battery (502) is excluded.

3. The arrangement of any one of claims 1 or 2,
wherein the battery (502) is arranged below sea level (302).

4. The arrangement of any one of claims 1 or 2,
wherein the battery (502) is arranged above sea level (302).

5. The arrangement of any one of claims 1 to 3,
wherein the battery (502) is placed at the base portion of the substructure (104).

6. The arrangement of claim 5,
wherein the substructure is a buoy type substructure, and
wherein the battery (502) is contained within the buoy (604).

7. The arrangement of any one of claims 1 to 5,
wherein the substructure is a monopole substructure, and
wherein the battery (502) is contained within the substructure.

8. The arrangement of any one of claims 1 to 5, comprising:
a plurality of batteries (502),
wherein the substructure comprises a plurality of columns (602), each column (602) is connected to a brace (608),
wherein the batteries (502) are placed at, in a distributed manner, such that a battery is placed at least a portion of the columns (602).

9. The arrangement of any one of claims 1 to 8,
wherein the energy storage of the battery is based on the energy for the electrolyzer (200) to operate at between 1 to 4% of the power rating of the electrolyzer (200) for at least 24 hours.

10. The arrangement of any one of claims 1 to 8,
wherein the energy storage of the battery is based on the energy for the electrolyzer (200) to operate at between 1 to 4% of the power rating of the electrolyzer (200) for at least 72 hours.

## Patentansprüche

1. Anordnung, umfassend:
eine Offshore-Windturbine (100) in einem Inselmodus, wobei der Inselmodus darin besteht, dass die Windturbine von dem Netz getrennt ist, umfassend:
eine Stützstruktur (108), umfassend einen Turm (118), eine Übergangsstruktur (114) und eine Unterstruktur (104, 508, 606, 602, 612), wobei die Übergangsstruktur (114) mit dem Turm (118) verbunden ist und mit der Unterstruktur (104) verbunden ist,
wobei sich die Unterstruktur (104) über dem Meeresspiegel (302) befindet,
einen Generator (102), umfassend eine drehbare Nabe (106) mit mindestens einem Blatt (110), das an der drehbaren Nabe (106) montiert ist, und
eine Gondel (112), die auf dem Turm (118) montiert ist, wobei die Gondel (112) den Generator (102) beherbergt;
eine Batterie (502), die elektrisch mit dem Generator (102) verbunden und dazu konfiguriert ist, durch die Windturbine während einer Drehung der drehbaren Nabe geladen zu werden, wobei die Batterie an der Unterstruktur (508, 606, 602, 612) platziert ist; und
einen Elektrolyseur (200), der elektrisch mit dem Generator (102) verbunden und elektrisch mit der Batterie (502) verbunden ist,
wobei der Generator (102) während eines Betriebsmodus des Elektrolyseurs (200) dazu konfiguriert ist, den Elektrolyseur (200) über die Verbindung zwischen dem Elektrolyseur (200) und dem Generator (102) mit Energie zu versorgen,
wobei während eines Bereitschaftsmodus des Elektrolyseurs (200) die Batterie (502) dazu konfiguriert ist, den Elektrolyseur (200) mit Energie zu versorgen, und eine Hilfsanordnung (708) des Elektrolyseurs dazu konfiguriert ist, den Elektrolyseur (200) dadurch dazu konditioniert zu halten, anzufangen, Wasserstoff zu produzieren, dass sie die Zellen (208) des Elektrolyseurs druckbeaufschlagt und warm hält, während der Elektrolyseur (200) keinen Wasserstoff produziert, und
wobei die Übergangsstruktur (114) eine Plattform ist und
wobei der Elektrolyseur (200) auf der Plattform angeordnet ist.

2. Anordnung nach Anspruch 1,
wobei ein Gegengewicht, um das Gewicht der Batterie (502) auszugleichen, ausgeschlossen ist.

3. Anordnung nach einem der Ansprüche 1 oder 2,
wobei die Batterie (502) unter dem Meeresspiegel (302) angeordnet ist.

4. Anordnung nach einem der Ansprüche 1 oder 2,
wobei die Batterie (502) über dem Meeresspiegel (302) angeordnet ist.

5. Anordnung nach einem der Ansprüche 1 bis 3,
wobei die Batterie (502) an dem Basisabschnitt der Unterstruktur (104) platziert ist.

6. Anordnung nach Anspruch 5,
wobei die Unterstruktur eine Unterstruktur einer Bojen-Art ist und
wobei die Batterie (502) innerhalb der Boje (604) enthalten ist.

7. Anordnung nach einem der Ansprüche 1 bis 5,
wobei die Unterstruktur eine Monopol-Unterstruktur ist und
wobei die Batterie (502) innerhalb der Unterstruktur enthalten ist.

8. Anordnung nach einem der Ansprüche 1 bis 5, umfassend:
eine Vielzahl von Batterien (502),
wobei die Unterstruktur eine Vielzahl von Säulen (602) umfasst, wobei jede Säule (602) mit einer Strebe (608) verbunden ist,
wobei die Batterien (502) in einer verteilten Weise derart an einer Batterie platziert sind, dass eine Batterie mindestens einem Abschnitt der Säulen (602) platziert ist.

9. Anordnung nach einem der Ansprüche 1 bis 8,
wobei der Energiespeicher der Batterie auf der Energie für den Elektrolyseur (200) basiert, um für mindestens 24 Stunden bei zwischen 1 und 4 % der Leistungsbewertung des Elektrolyseurs (200) betrieben zu werden.

10. Anordnung nach einem der Ansprüche 1 bis 8,
wobei der Energiespeicher der Batterie auf der Energie für den Elektrolyseur (200) basiert, um für mindestens 72 Stunden bei zwischen 1 und 4 % der Leistungsbewertung des Elektrolyseurs (200) betrieben zu werden.

## Revendications

1. Agencement, comprenant :
une éolienne en mer (100) dans un mode îloté, le mode îloté correspondant au cas où l'éolienne est isolée du réseau, comprenant :
une structure de support (108) comprenant une tour (118), une structure de transition (114) et une sous-structure (104, 508, 606, 602, 612), dans lequel la structure de transition (114) est reliée à la tour (118) et est reliée à la sous-structure (104),
dans lequel la sous-structure (104) se situe au-dessus du niveau de la mer (302),
un générateur (102) comprenant un moyeu rotatif (106) avec au moins une pale (110) montée sur le moyeu rotatif (106), et
une nacelle (112) montée sur la tour (118), la nacelle (112) logeant le générateur (102) ;
une batterie (502) reliée électriquement au générateur (102) et configurée pour être chargée par l'éolienne pendant une rotation du moyeu rotatif, dans lequel la batterie est placée au niveau de la sous-structure (508, 606, 602, 612) ; et
un électrolyseur (200) relié électriquement au générateur (102) et relié électriquement à la batterie (502),
dans lequel, pendant un mode de fonctionnement de l'électrolyseur (200), le générateur (102) est configuré pour fournir de l'énergie à l'électrolyseur (200) par l'intermédiaire de la liaison entre l'électrolyseur (200) et le générateur (102),
dans lequel, pendant un mode d'attente de l'électrolyseur (200), la batterie (502) est configurée pour fournir de l'énergie à l'électrolyseur (200) et un agencement auxiliaire (708) de l'électrolyseur est configuré pour maintenir l'électrolyseur (200) en condition pour commencer à produire de l'hydrogène en maintenant les cellules (208) de l'électrolyseur sous pression et chaudes, pendant que l'électrolyseur (200) ne produit pas d'hydrogène, et
dans lequel la structure de transition (114) est une plate-forme, et
dans lequel l'électrolyseur (200) est agencé sur la plate-forme.

2. Agencement selon la revendication 1,
dans lequel l'utilisation d'un contrepoids pour compenser le poids de la batterie (502) est exclue.

3. Agencement selon l'une quelconque des revendications 1 ou 2,
dans lequel la batterie (502) est agencée en dessous du niveau de la mer (302).

4. Agencement selon l'une quelconque des revendications 1 ou 2,
dans lequel la batterie (502) est agencée au-dessus du niveau de la mer (302).

5. Agencement selon l'une quelconque des revendications 1 à 3,
dans lequel la batterie (502) est placée au niveau de la portion de base de la sous-structure (104).

6. Agencement selon la revendication 5,
dans lequel la sous-structure est une sous-structure de type bouée, et
dans lequel la batterie (502) est contenue à l'intérieur de la bouée (604).

7. Agencement selon l'une quelconque des revendications 1 à 5,
dans lequel la sous-structure est une sous-structure monopieu, et
dans lequel la batterie (502) est contenue à l'intérieur de la sous-structure.

8. Agencement selon l'une quelconque des revendications 1 à 5, comprenant :
une pluralité de batteries (502),
dans lequel la sous-structure comprend une pluralité de colonnes (602), chaque colonne (602) étant reliée à une entretoise (608),
dans lequel les batteries (502) sont placées de manière répartie, de sorte qu'une batterie soit placée au niveau d'au moins une partie des colonnes (602).

9. Agencement selon l'une quelconque des revendications 1 à 8,
dans lequel la capacité de stockage d'énergie de la batterie est basée sur l'énergie nécessaire à l'électrolyseur (200) pour fonctionner à une puissance comprise entre 1 et 4 % de la puissance nominale de l'électrolyseur (200) pendant au moins 24 heures.

10. Agencement selon l'une quelconque des revendications 1 à 8,
dans lequel la capacité de stockage d'énergie de la batterie est basée sur l'énergie nécessaire à l'électrolyseur (200) pour fonctionner à une puissance comprise entre 1 et 4 % de la puissance nominale de l'électrolyseur (200) pendant au moins 72 heures.
